(19) Europäisches Patentamt
European Patent Office
Office européen des brevets

(11) **EP 4 503 063 A1**

(12) **EUROPEAN PATENT APPLICATION**
published in accordance with Art. 153(4) EPC

(43) Date of publication:
**05.02.2025 Bulletin 2025/06**

(21) Application number: 23780910.8

(22) Date of filing: **30.03.2023**

(51) International Patent Classification (IPC):
**H01B 7/02** (2006.01)     **C08F 214/26** (2006.01)
**H01B 3/24** (2006.01)

(52) Cooperative Patent Classification (CPC):
**C08F 14/26; C08F 214/26; H01B 3/24; H01B 7/02;
H01B 7/29**

(86) International application number:
**PCT/JP2023/013255**

(87) International publication number:
**WO 2023/190902 (05.10.2023 Gazette 2023/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 30.03.2022  JP 2022055231
15.07.2022  JP 2022114221
26.08.2022  JP 2022135151

(71) Applicant: DAIKIN INDUSTRIES, LTD.
Osaka-shi, Osaka 530-0001 (JP)

(72) Inventors:
• ZENKE, Yumi
Osaka-Shi, Osaka 530-0001 (JP)
• ISAKA, Tadaharu
Osaka-Shi, Osaka 530-0001 (JP)
• YAMAMOTO, Yukari
Osaka-Shi, Osaka 530-0001 (JP)
• KOZUKI, Takeshi
Osaka-Shi, Osaka 530-0001 (JP)
• YAMAGUCHI, Yasuyuki
Osaka-Shi, Osaka 530-0001 (JP)

(74) Representative: Hoffmann Eitle
Patent- und Rechtsanwälte PartmbB
Arabellastraße 30
81925 München (DE)

(54) **COATED ELECTRIC CABLE**

(57)     There is provided a coated electric wire comprising a core wire and a coating layer installed on a periphery of the core wire, wherein the coating layer comprises a fluorine-containing copolymer comprising tetrafluoroethylene unit, hexafluoropropylene unit, and a fluoro(alkyl vinyl ether) unit, the fluorine-containing copolymer has a content of hexafluoropropylene unit of 9.5 to 10.5% by mass with respect to the whole of the monomer units, the fluorine-containing copolymer has a content of the fluoro(alkyl vinyl ether) unit of 0 to 0.3% by mass with respect to the whole of the monomer units, and the fluorine-containing copolymer has a melt flow rate at 372°C of 5.6 to 8.9 g/10 min.

## Description

TECHNICAL FIELD

The present disclosure relates to a coated electric wire.

BACKGROUND ART

Patent Literature 1 describes an electric wire or cable coated with a fluorine-containing polymer in which the total amount (ppm) of alkali metals and alkaline earth metals contained therein does not exceed the value calculated from the melt flow rate (MFR) (g/10 min, ASTM D2116) at 372°C according to the following formula (1):

$$5.2 \times e^{0.125(MFR)} + 2 \quad (1)$$

but exceeds the value calculated according to the following formula (2):

$$0.35 \times e^{0.125(MFR)} \quad (2).$$

RELATED ART

PATENT LITERATURE

Patent Literature 1: International Publication No. WO2001/018076

SUMMARY OF THE INVENTION

PROBLEM TO BE SOLVED BY THE INVENTION

An object of the present disclosure is to provide a coated electric wire comprising a coating layer that has a uniform thickness and can easily be formed by an extrusion forming method, in which the coating layer can maintain excellent 150°C tensile creep resistance, excellent ductility to tensile force applied at 150°C, and excellent deformation resistance to tensile load applied at 150°C, even after being installed in hot water at a high temperature for a long time, and hardly causes cracks even after being installed in hot water at a high temperature for a long time and then being further heated for a long time in the state of being wound on a cylinder with a small diameter.

MEANS FOR SOLVING THE PROBLEM

According to the present disclosure, there is provided a coated electric wire comprising a core wire and a coating layer installed on a periphery of the core wire, wherein the coating layer comprises a fluorine-containing copolymer comprising tetrafluoroethylene unit, hexafluoropropylene unit, and a fluoro(alkyl vinyl ether) unit, the fluorine-containing copolymer has a content of hexafluoropropylene unit of 9.5 to 10.5% by mass with respect to the whole of the monomer units, the fluorine-containing copolymer has a content of the fluoro(alkyl vinyl ether) unit of 0 to 0.3% by mass with respect to the whole of the monomer units, and the fluorine-containing copolymer has a melt flow rate at 372°C of 5.6 to 8.9 g/10 min.

EFFECTS OF INVENTION

According to the present disclosure, there can be provided a coated electric wire comprising a coating layer that has a uniform thickness and can easily be formed by an extrusion forming method, in which the coating layer can maintain excellent 150°C tensile creep resistance, excellent ductility to tensile force applied at 150°C, and excellent deformation resistance to tensile load applied at 150°C, even after being installed in hot water at a high temperature for a long time, and hardly causes cracks even after being installed in hot water at a high temperature for a long time and then being further heated for a long time in the state of being wound on a cylinder with a small diameter.

DESCRIPTION OF EMBODIMENTS

Hereinafter, specific embodiments of the present disclosure will be described in detail, but the present disclosure is not limited to the following embodiments.

A coated electric wire of the present disclosure comprises a core wire and a coating layer installed on the periphery of the core wire, and the coating layer comprises tetrafluoroethylene (TFE) unit, hexafluoropropylene (HFP) unit, and a fluoro(alkyl vinyl ether) (FAVE) unit.

Fluororesins are used as coating materials for electric wires because of their excellent electric properties, as described in Patent Literature 1. Fluororesins are also used as coating materials for heat-resistant electric wires used in high-temperature environments because of their excellent heat resistance.

However, conventional fluororesins used as coating materials for electric wires are only intended for use in high-temperature environments, and there is a problem that their heat resistance is not sufficient for use as coating materials for electric wires that are installed in hot water for a long time.

Then, the present inventors have diligently investigated a fluororesin that can easily form a coating layer that does not fluctuate in thickness and that can form a coating layer that can protect an electric wire even when installed in hot water for a long time, and have found that the use of a fluorine-containing copolymer comprising TFE unit, HFP unit, and a FAVE unit, in which the contents of HFP unit and FAVE unit, as well as the melt flow rate, are adjusted within extremely limited ranges, as a coating material can protect an electric wire to an unprecedentedly high level even when used as a coating material for electric wires to be installed in hot water for a long time, thus leading to the completion of the present invention.

That is, the coated electric wire of the present disclosure comprises a coating layer comprising a fluorine-containing copolymer in which the contents of HFP unit and FAVE unit, as well as the melt flow rate, have been appropriately adjusted. Since this coating layer is formed of such a fluorine-containing copolymer, it can easily be formed by extruding the melted fluorine-containing copolymer onto the core wire, and the thickness of the coating layer can easily be made uniform as well. Also, this coating layer can maintain excellent 150°C tensile creep resistance, excellent ductility to tensile force applied at 150°C, and excellent deformation resistance to tensile load applied at 150°C, even after being installed in hot water at a high temperature, such as 150°C, for a long time. Furthermore, this coating layer hardly causes cracks even after being installed in hot water at a high temperature for a long time and then being further heated for a long time in the state of being wound on a cylinder with a small diameter.

The copolymer contained in the coating layer is a melt-fabricable fluororesin. Being melt-fabricable means that a polymer can be melted and processed by using a conventional processing device such as an extruder or an injection molding machine.

The FAVE constituting the above FAVE unit includes at least one selected from the group consisting of monomers represented by the following general formula (1):

$$CF_2=CFO(CF_2CFY^1O)_p-(CF_2CF_2CF_2O)_q-Rf \qquad (1)$$

wherein $Y^1$ represents F or $CF_3$, Rf represents a perfluoroalkyl group having 1 to 5 carbon atoms, p represents an integer of 0 to 5, and q represents an integer of 0 to 5, and
monomers represented by the following general formula (2):

$$CFX=CXOCF_2OR^1 \qquad (2)$$

wherein X is the same or different and represents H, F or $CF_3$, and $R^1$ represents a linear or branched fluoroalkyl group having 1 to 6 carbon atoms, optionally containing 1 to 2 atoms of at least one type selected from the group consisting of H, Cl, Br and I, or a cyclic fluoroalkyl group having 5 or 6 carbon atoms, optionally containing 1 to 2 atoms of at least one type selected from the group consisting of H, Cl, Br and I.

In particular, as the above FAVE, monomers represented by the general formula (1) are preferred, at least one selected from the group consisting of perfluoro(methyl vinyl ether), perfluoro(ethyl vinyl ether) (PEVE), and perfluoro(propyl vinyl ether) (PPVE) is more preferred, at least one selected from the group consisting of PEVE and PPVE is still more preferred, and PPVE is especially preferred.

The content of HFP unit of the fluorine-containing copolymer is, with respect to the whole of the monomer units, 9.5 to 10.5% by mass, and preferably 9.6% by mass or higher, and preferably 10.4% by mass or lower, more preferably 10.2% by mass or lower and still more preferably 10.1% by mass or lower. When the content of HFP unit is too low, coating layers with excellent ductility to tensile force applied at 150°C and excellent crack resistance after being installed in hot water at a high temperature for a long time cannot be obtained. When the content of HFP unit is too high, coating layers with excellent 150°C tensile creep resistance and deformation resistance to tensile load applied at 150°C after being installed in hot water at a high temperature for a long time cannot be obtained.

The content of the FAVE unit of the fluorine-containing copolymer is, with respect to the whole of the monomer units, 0 to 0.3% by mass, and preferably 0.2% by mass or lower and more preferably 0.1% by mass or lower. When the content of the FAVE unit is too high, coating layers with excellent 150°C tensile creep resistance and deformation resistance to tensile load applied at 150°C after being installed in hot water at a high temperature for a long time cannot be obtained.

The content of TFE unit of the fluorine-containing copolymer is, with respect to the whole of the monomer units, preferably 89.2% by mass or higher, more preferably 89.3% by mass or higher, still more preferably 89.4% by mass or higher, further still more preferably 89.5% by mass or higher, especially preferably 89.6% by mass or higher and most preferably 89.8% by mass or higher, and preferably 90.5% by mass or lower, more preferably 90.4% by mass or lower and still more preferably 90.3% by mass or lower. Then, the content of TFE unit may be selected so that the total of contents of HFP unit, FAVE unit, TFE unit and other monomer units becomes 100% by mass.

The fluorine-containing copolymer of the present disclosure is not limited as long as the copolymer contains the above three monomer units, and may be a copolymer containing only the above three monomer units, or may be a copolymer containing the above three monomer units and other monomer units.

The other monomers are not limited as long as being copolymerizable with TFE, HFP and FAVE, and may be fluoromonomers or fluorine-non-containing monomers.

It is preferable that the fluoromonomer is at least one selected from the group consisting of chlorotrifluoroethylene, vinyl fluoride, vinylidene fluoride, trifluoroethylene, hexafluoroisobutylene, monomers represented by $CH_2=CZ^1(CF_2)_nZ^2$ (wherein $Z^1$ is H or F, $Z^2$ is H, F or Cl, and n is an integer of 1 to 10), alkyl perfluorovinyl ether derivatives represented by $CF_2=CF-O-CH_2-Rf^2$ (wherein $Rf^2$ is a perfluoroalkyl group having 1 to 5 carbon atoms), perfluoro-2,2-dimethyl- 1,3-dioxol [PDD], and perfluoro-2-methylene-4-methyl-1,3-dioxolane [PMD].

The monomers represented by $CH_2=CZ^1(CF_2)_nZ^2$ include $CH_2=CFCF_3$, $CH_2=CH-C_4F_9$, $CH_2=CH-C_6F_{13}$, and $CH_2=CF-C_3F_6H$.

The fluorine-non-containing monomers include hydrocarbon-based monomers copolymerizable with TFE, HFP and FAVE. Examples of the hydrocarbon-based monomers include alkenes such as ethylene, propylene, butylene, and isobutylene; alkyl vinyl ethers such as ethyl vinyl ether, propyl vinyl ether, butyl vinyl ether, isobutyl vinyl ether, and cyclohexyl vinyl ether; vinyl esters such as vinyl acetate, vinyl propionate, n-vinyl butyrate, vinyl isobutyrate, vinyl valerate, vinyl pivalate, vinyl caproate, vinyl caprylate, vinyl caprate, vinyl versatate, vinyl laurate, vinyl myristate, vinyl palmitate, vinyl stearate, vinyl benzoate, vinyl para-t-butylbenzoate, vinyl cyclohexanecarboxylate, vinyl monochloroacetate, vinyl adipate, vinyl acrylate, vinyl methacrylate, vinyl crotonate, vinyl sorbate, vinyl cinnamate, vinyl undecylenate, vinyl hydroxyacetate, vinyl hydroxypropionate, vinyl hydroxybutyrate, vinyl hydroxyvalerate, vinyl hydroxyisobutyrate, and vinyl hydroxycyclohexanecarboxylate; alkyl allyl ethers such as ethyl allyl ether, propyl allyl ether, butyl allyl ether, isobutyl allyl ether, and cyclohexyl allyl ether; and alkyl allyl esters such as ethyl allyl ester, propyl allyl ester, butyl allyl ester, isobutyl allyl ester, and cyclohexyl allyl ester.

The fluorine-non-containing monomers may also be functional group-containing hydrocarbon-based monomers copolymerizable with TFE, HFP and FAVE. Examples of the functional group-containing hydrocarbon-based monomers include hydroxyalkyl vinyl ethers such as hydroxyethyl vinyl ether, hydroxypropyl vinyl ether, hydroxybutyl vinyl ether, hydroxyisobutyl vinyl ether, and hydroxycyclohexyl vinyl ether; fluorine-non-containing monomers having a glycidyl group, such as glycidyl vinyl ether and glycidyl allyl ether; fluorine-non-containing monomers having an amino group, such as aminoalkyl vinyl ethers and aminoalkyl allyl ethers; fluorine-non-containing monomers having an amido group, such as (meth)acrylamide and methylolacrylamide; bromine-containing olefins, iodine-containing olefins, bromine-containing vinyl ethers, and iodine-containing vinyl ethers; and fluorine-non-containing monomers having a nitrile group.

The content of the other monomer units in the fluorine-containing copolymer of the present disclosure is, with respect to the whole of the monomer units, preferably 0 to 1.3% by mass, and more preferably 1.0% by mass or lower, still more preferably 0.5% by mass or lower and especially preferably 0.1% by mass or lower.

The fluorine-containing copolymer has a melt flow rate (MFR) of 5.6 to 8.9 g/10 min. The MFR of the fluorine-containing copolymer is preferably 5.7 g/10 min or higher, more preferably 5.8 g/10 min or higher, still more preferably 5.9 g/10 min or higher, especially preferably 6.0 g/10 min or higher and most preferably 6.1 g/10 min or higher, and preferably 8.7 g/10 min or lower, more preferably 8.6 g/10 min or lower, still more preferably 8.5 g/10 min or lower, further still more preferably 8.4 g/10 min or lower, further still more preferably 8.3 g/10 min or lower, especially preferably 8.2 g/10 min or lower and most preferably 8.1 g/10 min or lower. When the MFR is too low, coating layers with excellent deformation resistance to tensile load applied at 150°C after being installed in hot water at a high temperature for a long time cannot be obtained. When the MFR is too high, coating layers that have excellent 150°C tensile creep resistance and excellent ductility to tensile force applied at 150°C after being installed in hot water at a high temperature for a long time and that hardly cause cracks even when heated for a long time in the state of being wound on a cylinder with a small diameter cannot be obtained. Then, when the MFR is too high, and also when too low, it becomes difficult to form coating layers with a uniform thickness.

In the present disclosure, the MFR is a value obtained as a mass (g/10 min) of a polymer flowing out from a die of 2 mm in inner diameter and 8 mm in length per 10 min at 372°C under a load of 5 kg using a melt indexer G-01 (manufactured by Toyo Seiki Seisaku-sho Ltd.), according to ASTM D1238.

The MFR can be regulated by regulating the kind and amount of a polymerization initiator to be used in polymerization of monomers, the kind and amount of a chain transfer agent, and the like.

The fluorine-containing copolymer of the present disclosure may or may not have a carbonyl group-containing terminal group, -CF=CF$_2$ or -CH$_2$OH. The fluorine-containing copolymer preferably has a total number of the carbonyl group-containing terminal group, -CF=CF$_2$ and -CH$_2$OH of 70 or less per 10$^6$ main-chain carbon atoms. The total number of the carbonyl group-containing terminal group, -CF=CF$_2$ and -CH$_2$OH is, in the ascending order of preference, 60 or less, 50 or less, 40 or less and 30 or less. By making the total number of the carbonyl group-containing terminal group, -CF=CF$_2$ and -CH$_2$OH in the above range, forming defects can be further suppressed and coating layers with better heat resistance can be obtained. The total number of the carbonyl group-containing terminal group, -CF=CF$_2$ and -CH$_2$OH can be regulated, for example, by suitable selection of the kind of a polymerization initiator or a chain transfer agent, or by a wet heat treatment or fluorination treatment of the fluorine-containing copolymer described later.

The carbonyl group-containing terminal groups are for example, -COF, -COOH, -COOR (R is an alkyl group), -CONH$_2$, and -O(C=O)O-R (R is an alkyl group). The kinds of the alkyl groups (R) -COOR and -O(C=O)O-R have are determined depending on a polymerization initiator or a chain transfer agent used in production of the fluorine-containing copolymer, and are, for example, alkyl groups having 1 to 6 carbon atoms, such as -CH$_3$.

The fluorine-containing copolymer may or may not have - CF$_2$H. It is preferable that the fluorine-containing copolymer has -CF$_2$H since forming defects can be further suppressed and coating layers with better heat resistance can be obtained. The number of -CF$_2$H of the fluorine-containing copolymer, per 10$^6$ main-chain carbon atoms, may be 50 or more, and is preferably 60 or more, more preferably more than 90, still more preferably more than 120, further still more preferably more than 150, especially preferably 200 or more and most preferably 250 or more. The upper limit of the number of -CF$_2$H is not limited, and may be, for example, 800. The number of - CF$_2$H can be regulated, for example, by suitable selection of the kind of a polymerization initiator or a chain transfer agent, or by a wet heat treatment or fluorination treatment of the fluorine-containing copolymer described later.

For identification of the kind of the functional groups and measurement of the number of the functional groups, infrared spectroscopy can be used.

The number of the functional groups is measured, specifically, by the following method. First, the fluorine-containing copolymer is molded by cold press to prepare a film of 0.25 to 0.30 mm in thickness. The film is analyzed by Fourier transform infrared spectroscopy to obtain an infrared absorption spectrum, and a difference spectrum against a base spectrum that is completely fluorinated and has no functional groups is obtained. From an absorption peak of a specific functional group observed on this difference spectrum, the number N of the functional group per $1 \times 10^6$ carbon atoms in the fluorine-containing copolymer is calculated according to the following formula (A).

$$N = I \times K/t \cdots (A)$$

I: absorbance
K: correction factor
t: thickness of film (mm)

For reference, for some functional groups, the absorption frequency, the molar absorption coefficient and the correction factor are shown in Table 1. Then, the molar absorption coefficients are those determined from FT-IR measurement data of low molecular model compounds.

[Table 1]

Table 1

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | C$_7$F$_{15}$COF |
| -COOH free | 1815 | 530 | 439 | H(CF$_2$)$_6$COOH |
| -COOH bonded | 1779 | 530 | 439 | H(CF$_2$)$_6$COOH |
| -COOCH$_3$ | 1795 | 680 | 342 | C$_7$F$_{15}$COOCH$_3$ |
| -CONH$_2$ | 3436 | 506 | 460 | C$_7$H$_{15}$CONH$_2$ |
| -CH$_2$OH$_2$, -OH | 3648 | 104 | 2236 | C$_7$H$_{15}$CH$_2$OH |

(continued)

| Functional Group | Absorption Frequency (cm$^{-1}$) | Molar Extinction Coefficient (l/cm/mol) | Correction Factor | Model Compound |
|---|---|---|---|---|
| -CF$_2$H | 3020 | 8.8 | 26485 | H(CF$_2$CF$_2$)$_3$CH$_2$OH |
| -CF=CF$_2$ | 1795 | 635 | 366 | CF$_2$=CF$_2$ |

Absorption frequencies of -CH$_2$CF$_2$H, -CH$_2$COF, -CH$_2$COOH, - CH$_2$COOCH$_3$ and -CH$_2$CONH$_2$ are lower by a few tens of kaysers (cm$^{-1}$) than those of -CF$_2$H, -COF, -COOH free and -COOH bonded, -COOCH$_3$ and -CONH$_2$ shown in the Table, respectively.

For example, the number of the functional group -COF is the total of the number of a functional group determined from an absorption peak having an absorption frequency of 1,883 cm$^{-1}$ derived from -CF$_2$COF and the number of a functional group determined from an absorption peak having an absorption frequency of 1,840 cm$^{-1}$ derived from -CH$_2$COF.

The number of -CF$_2$H groups can also be determined from a peak integrated value of the -CF$_2$H group acquired in a $^{19}$F-NMR measurement using a nuclear magnetic resonance spectrometer and set at a measurement temperature of (the melting point of a polymer + 20)°C.

Functional groups such as a -CF$_2$H group are functional groups present on the main chain terminals or side chain terminals of the fluorine-containing copolymer, and functional groups present on the main chain or the side chains thereof. These functional groups are introduced to the fluorine-containing copolymer, for example, by a chain transfer agent or a polymerization initiator used in production of the fluorine-containing copolymer. For example, in the case of using an alcohol as the chain transfer agent, or a peroxide having a structure of -CH$_2$OH as the polymerization initiator, - CH$_2$OH is introduced on the main chain terminals of the fluorine-containing copolymer. Alternatively, the functional group is introduced on the side chain terminal of the fluorine-containing copolymer by polymerizing a monomer having the functional group.

By carrying out a treatment such as a wet heat treatment or a fluorination treatment on the fluorine-containing copolymer having such functional groups, there can be obtained the fluorine-containing copolymer having the number of functional groups in the above range. The fluorine-containing copolymer is more preferably one having been subjected to a wet heat treatment.

The melting point of the fluorine-containing copolymer is preferably 220 to 290°C, more preferably 255 to 275°C and still more preferably 264 to 271°C, as the properties of the coating layer can be further improved.

In the present disclosure, the melting point can be measured by using a differential scanning calorimeter [DSC].

The fluorine-containing copolymer can be produced by any polymerization method of bulk polymerization, suspension polymerization, solution polymerization, emulsion polymerization and the like. In these polymerization methods, conditions such as temperature and pressure, a polymerization initiator, a chain transfer agent, a solvent and other additives can suitably be set depending on the composition and the amount of a desired fluorine-containing copolymer.

The polymerization initiator may be an oil-soluble radical polymerization initiator or a water-soluble radical initiator.

An oil-soluble radical polymerization initiator may be a known oil-soluble peroxide, and examples thereof typically include:

dialkyl peroxycarbonates such as di-n-propyl peroxydicarbonate, diisopropyl peroxydicarbonate, di-sec-butyl peroxydicarbonate;
peroxyesters such as t-butyl peroxyisobutyrate and t-butyl peroxypivalate;
dialkyl peroxides such as di-t-butyl peroxide; and
di[fluoro(or fluorochloro)acyl] peroxides.

The di[fluoro(or fluorochloro)acyl] peroxides include diacyl peroxides represented by [(RfCOO)-]$_2$ wherein Rf is a perfluoroalkyl group, an ω-hydroperfluoroalkyl group or a fluorochloroalkyl group.

Examples of the di[fluoro(or fluorochloro)acyl] peroxides include di(ω-hydroperfluorohexanoyl) peroxide, di(ω-hydro-dodecafluoroheptanoyl) peroxide, di(ω-hydro-tetradecafluorooctanoyl) peroxide, di(ω-hydro-hexadecafluorononanoyl) peroxide, di(perfluorobutyryl) peroxide, di(perfluorovaleryl) peroxide, di(perfluorohexanoyl) peroxide, di(perfluoroheptanoyl) peroxide, di(perfluorooctanoyl) peroxide, di(perfluorononanoyl) peroxide, di(ω-chloro-hexafluorobutyryl) peroxide, di(ω-chloro-decafluorohexanoyl) peroxide, di(ω-chloro-tetradecafluorooctanoyl) peroxide, ω-hydrododecafluoroheptanoyl-ω-hydrohexadecafluorononanoyl peroxide, ω-chloro-hexafluorobutyryl-ω-chloro-decafluorohexanoyl peroxide, ω-hydrododecafluoroheptanoyl-perfluorobutyryl peroxide, di(dichloropentafluorobutanoyl) peroxide, di(trichlorooctafluorohexanoyl) peroxide, di(tetrachloroundecafluorooctanoyl) peroxide, di(pentachlorotetradecafluorodecanoyl) peroxide and di(undecachlorotriacontafluorodocosanoyl) peroxide.

The water-soluble radical polymerization initiator may be a well known water-soluble peroxide, and examples thereof include ammonium salts, potassium salts and sodium salts of persulfuric acid, perboric acid, perchloric acid, perphosphoric acid, percarbonic acid and the like, and t-butyl permaleate and t-butyl hydroperoxide. A reductant such as a sulfite salt may be combined with a peroxide and used, and the amount thereof to be used may be 0.1 to 20 times with respect to the peroxide.

Use of an oil-soluble radical polymerization initiator as the polymerization initiator is preferable, because of enabling avoidance of the formation of -COF and -COOH, and enabling easy regulation of the total number of -COF and -COOH of the fluorine-containing copolymer in the above-mentioned range. Further, use of the oil-soluble radical polymerization initiator is likely to make it easy also for the carbonyl group-containing terminal group and $-CH_2OH$ to be regulated in the above-mentioned range. It is especially suitable that the fluorine-containing copolymer is produced by suspension polymerization using the oil-soluble radical polymerization initiator. The oil-soluble radical polymerization initiator is preferably at least one selected from the group consisting of dialkyl peroxycarbonates and di[fluoro(or fluorochloro)acyl] peroxides, and more preferably at least one selected from the group consisting of di-n-propyl peroxydicarbonate, diisopropyl peroxydicarbonate, and di($\omega$-hydro-dodecafluoroheptanoyl) peroxide.

Examples of the chain transfer agent include hydrocarbons such as ethane, isopentane, n-hexane and cyclohexane; aromatics such as toluene and xylene; ketones such as acetone; acetates such as ethyl acetate and butyl acetate; alcohols such as methanol, ethanol and 2,2,2-trifluoroethanol; mercaptans such as methyl mercaptan; halogenated hydrocarbons such as carbon tetrachloride, chloroform, methylene chloride and methyl chloride; and 3-fluorobenzotrifluoride. The amount thereof to be added can vary depending on the magnitude of the chain transfer constant of a compound to be used, but the chain transfer agent is used usually in the range of 0.01 to 20 parts by mass with respect to 100 parts by mass of a solvent.

For example, in the cases of using a dialkyl peroxycarbonate, a di[fluoro(or fluorochloro)acyl] peroxide or the like as a polymerization initiator, although there are some cases where the molecular weight of an obtained fluorine-containing copolymer becomes too high and the regulation of the melt flow rate to a desired one is not easy, the molecular weight can be regulated by using the chain transfer agent. It is especially suitable that the fluorine-containing copolymer is produced by suspension polymerization using the chain transfer agent such as an alcohol and the oil-soluble radical polymerization initiator.

The solvent includes water and mixed solvents of water and an alcohol. A monomer to be used for the polymerization of the fluorine-containing copolymer can also be used as the solvent.

In the suspension polymerization, in addition to water, a fluorosolvent may be used. The fluorosolvent may include hydrochlorofluoroalkanes such as $CH_3CClF_2$, $CH_3CCl_2F$, $CF_3CF_2CCl_2H$ and $CF_2ClCF_2CFHCl$; chlorofluoroa-laknes such as $CF_2ClCFClCF_2CF_3$ and $CF_3CFClCFClCF_3$; and perfluoroalkanes such as perfluorocyclobutane, $CF_3CF_2CF_2CF_3$, $CF_3CF_2CF_2CF_2CF_3$ and $CF_3CF_2CF_2CF_2CF_3$, and among these, perfluoroalkanes are preferred. The amount of the fluorosolvent to be used is, from the viewpoint of the suspensibility and the economic efficiency, preferably 10 to 100 parts by mass with respect to 100 parts by mass of the solvent.

The polymerization temperature is not limited, and may be 0 to 100°C. In the case where the decomposition rate of the polymerization initiator is too high, including cases of using a dialkyl peroxycarbonate, a di[fluoro(or fluorochloro)acyl] peroxide or the like as the polymerization initiator, it is preferable to adopt a relatively low polymerization temperature such as in the temperature range of 0 to 35°C.

The polymerization pressure can suitably be determined according to other polymerization conditions such as the kind of the solvent to be used, the amount of the solvent, the vapor pressure and the polymerization temperature, but usually may be 0 to 9.8 MPaG. The polymerization pressure is preferably 0.1 to 5 MPaG, more preferably 0.5 to 2 MPaG and still more preferably 0.5 to 1.5 MPaG. When the polymerization pressure is 1.5 MPaG or higher, the production efficiency can be improved.

Examples of the additives in the polymerization include suspension stabilizers. The suspension stabilizers are not limited as long as being conventionally well-known ones, and methylcellulose, polyvinyl alcohols and the like can be used. With the use of a suspension stabilizer, suspended particles produced by the polymerization reaction are dispersed stably in an aqueous medium, and therefore the suspended particles hardly adhere on the reaction vessel even when a SUS-made reaction vessel not having been subjected to adhesion preventing treatment such as glass lining is used. Accordingly, a reaction vessel withstanding a high pressure can be used, and therefore the polymerization under a high pressure becomes possible and the production efficiency can be improved. By contrast, in the case of carrying out the polymerization without using the suspension stabilizer, the suspended particles may adhere and the production efficiency may be lowered with the use of a SUS-made reaction vessel not having been subjected to adhesion preventing treatment is used. The concentration of the suspension stabilizer in the aqueous medium can suitably be regulated depending on conditions.

In the case of obtaining an aqueous dispersion containing a fluoropolymer by a polymerization reaction, a dried fluoropolymer may be recovered by coagulating, cleaning and drying the fluorine-containing copolymer contained in the aqueous dispersion. Alternatively, in the case of obtaining the fluorine-containing copolymer as a slurry by a polymerization reaction, a dried fluoropolymer may be recovered by taking out the slurry from a reaction vessel, and cleaning and drying the slurry. The fluorine-containing copolymer can be recovered in a powder form by the drying.

The fluorine-containing copolymer obtained by the polymerization may be formed into pellets. A method of forming into pellets is not limited, and a conventionally known method can be used. Examples thereof include methods of melt extruding the fluorine-containing copolymer by using a single-screw extruder, a twin-screw extruder or a tandem extruder and cutting the resultant into a predetermined length to form the fluorine-containing copolymer into pellets. The extrusion temperature in the melt extrusion needs to be varied depending on the melt viscosity and the production method of the fluorine-containing copolymer, and is preferably the melting point of the fluorine-containing copolymer + 20°C to the melting point of the fluorine-containing copolymer + 140°C. A method of cutting the fluorine-containing copolymer is not limited, and there can be adopted a conventionally known method such as a strand cut method, a hot cut method, an underwater cut method, or a sheet cut method. Volatile components in the obtained pellets may be removed by heating the pellets (degassing treatment). Alternatively, the obtained pellets may be treated by bringing the pellets into contact with hot water of 30 to 200°C, steam of 100 to 200°C or hot air of 40 to 200°C.

The fluorine-containing copolymer obtained by the polymerization may be heated in the presence of air and water at a temperature of 100°C or higher (wet heat treatment). Examples of the wet heat treatment include a method in which by using an extruder, the fluorine-containing copolymer obtained by the polymerization is melted and extruded while air and water are fed. The wet heat treatment can convert thermally unstable functional groups of the fluorine-containing copolymer, such as -COF and -COOH, to thermally relatively stable -CF$_2$H, whereby the total number of -COF and -COOH and the total number of carbonyl group-containing terminal groups and -CH$_2$OH of the fluorine-containing copolymer can easily be regulated in the above-mentioned ranges. By heating the fluorine-containing copolymer, in addition to air and water, in the presence of an alkali metal salt, the conversion reaction to -CF$_2$H can be promoted. Depending on applications of the fluorine-containing copolymer, however, it should be paid regard to that contamination by the alkali metal salt must be avoided.

The fluorine-containing copolymer obtained by the polymerization may be subjected to a fluorination treatment, or may not be subjected to a fluorination treatment. From the viewpoint of avoiding temporal and economic burdens, it is preferable that the fluorine-containing copolymer is not subjected to a fluorination treatment. The fluorination treatment can be carried out by bringing the fluorine-containing copolymer subjected to no fluorination treatment into contact with a fluorine-containing compound. The fluorination treatment can convert thermally unstable functional groups of the fluorine-containing copolymer, such as the carbonyl group-containing terminal groups and -CH$_2$OH, and thermally relatively stable functional groups thereof, such as -CF$_2$H, to thermally very stable -CF$_3$. Resultantly, the total number of the carbonyl group-containing terminal groups and -CH$_2$OH of the fluorine-containing copolymer can easily be regulated in the above-mentioned range.

The fluorine-containing compound is not limited, but includes fluorine radical sources generating fluorine radicals under the fluorination treatment condition. The fluorine radical sources include F$_2$ gas, CoF$_3$, AgF$_2$, UF$_6$, OF$_2$, N$_2$F$_2$, CF$_3$OF, halogen fluorides (for example, IF$_5$ and ClF$_3$).

The fluorine radical source such as F$_2$ gas may be, for example, one having a concentration of 100%, but from the viewpoint of safety, the fluorine radical source is preferably mixed with an inert gas and diluted therewith to 5 to 50% by mass, and then used; and it is more preferably to be diluted to 15 to 30% by mass. The inert gas includes nitrogen gas, helium gas and argon gas, but from the viewpoint of the economic efficiency, nitrogen gas is preferred.

The condition of the fluorination treatment is not limited, and the fluorine-containing copolymer in a melted state may be brought into contact with the fluorine-containing compound, but the fluorination treatment can be carried out usually at a temperature of not higher than the melting point of the fluorine-containing copolymer, preferably at 20 to 220°C and more preferably at 100 to 200°C. The fluorination treatment is carried out usually for 1 to 30 hours and preferably 5 to 25 hours. The fluorination treatment is preferred which brings the fluorine-containing copolymer having been subjected to no fluorination treatment into contact with fluorine gas (F$_2$ gas).

The coating layer may comprise other components as required. The other components include fillers, plasticizers, processing aids, mold release agents, pigments, flame retarders, lubricants, light stabilizers, weathering stabilizers, electrically conductive agents, antistatic agents, ultraviolet absorbents, antioxidants, foaming agents, perfumes, oils, softening agents and dehydrofluorination agents.

Examples of the fillers include silica, kaolin, clay, organo clay, talc, mica, alumina, calcium carbonate, calcium terephthalate, titanium oxide, calcium phosphate, calcium fluoride, lithium fluoride, crosslinked polystyrene, potassium titanate, carbon, boron nitride, carbon nanotube and glass fiber. The electrically conductive agents include carbon black. The plasticizers include dioctyl phthalate and pentaerythritol. The processing aids include carnauba wax, sulfone compounds, low molecular weight polyethylene and fluorine-based auxiliary agents. The dehydrofluorination agents include organic oniums and amidines.

The other components may be other polymers other than the above-mentioned copolymer. The other polymers include fluororesins other than the above copolymer, fluoroelastomers and non-fluorinated polymers.

The coated electric wire of the present disclosure has a core wire, and the coating layer installed on the periphery of the core wire and containing the above copolymer. For example, an extrusion formed article made by melt extruding the above copolymer on a core wire can be made into the coating layer. The coated electric wires are suitable for LAN cables (Eathernet Cables), high-frequency transmission cables, flat cables and heat-resistant cables and the like, and particularly, for transmission cables such as LAN cables (Eathernet Cables) and high-frequency transmission cables.

As a material for the core wire, for example, a metal conductor material such as copper or aluminum can be used. The core wire is preferably one having a diameter of 0.02 to 3 mm. The diameter of the core wire is more preferably 0.04 mm or larger, still more preferably 0.05 mm or larger and especially preferably 0.1 mm or larger. The diameter of the core wire is more preferable 2 mm or smaller.

With regard to specific examples of the core wire, there may be used, for example, AWG (American Wire Gauge)-46 (solid copper wire of 40 $\mu$m in diameter), AWG-26 (solid copper wire of 404 $\mu$m in diameter), AWG-24 (solid copper wire of 510 $\mu$m in diameter), and AWG-22 (solid copper wire of 635 $\mu$m in diameter).

The coating layer is preferably one having a thickness of 0.1 to 3.0 mm. It is also preferable that the thickness of the coating layer is 2.0 mm or smaller.

The high-frequency transmission cables include coaxial cables. The coaxial cables generally have a structure configured by laminating an inner conductor, an insulating coating layer, an outer conductor layer and a protective coating layer in order from the core part to the peripheral part. The thickness of each layer in the above structure is not limited, but is usually: the diameter of the inner conductor is approximately 0.1 to 3 mm; the thickness of the insulating coating layer is approximately 0.3 to 3 mm; the thickness of the outer conductor layer is approximately 0.5 to 10 mm; and the thickness of the protective coating layer is approximately 0.5 to 2 mm.

Alternatively, the coating layer may be one containing cells, and is preferably one in which cells are homogeneously distributed.

The average cell size of the cells is not limited, but is, for example, preferably 60 $\mu$m or smaller, more preferably 45 $\mu$m or smaller, still more preferably 35 $\mu$m or smaller, further still more preferably 30 $\mu$m or smaller, especially preferable 25 $\mu$m or smaller and further especially preferably 23 $\mu$m or smaller. Then, the average cell size is preferably 0.1 $\mu$m or larger and more preferably 1 $\mu$m or larger. The average cell size can be determined by taking an electron microscopic image of an electric wire cross section, calculating the diameter of each cell and averaging the diameters.

The foaming ratio of the coating layer may be 20% or higher, and is more preferably 30% or higher, still more preferably 33% or higher and further still more preferably 35% or higher. The upper limit is not limited, but is, for example, 80%. The upper limit of the foaming ratio may be 60%. The foaming ratio is a value determined as ((the specific gravity of an electric wire coating material - the specific gravity of the coating layer)/(the specific gravity of the electric wire coating material) $\times$ 100. The foaming ratio can suitably be regulated according to applications, for example, by regulation of the amount of a gas, described later, to be injected in an extruder, or by selection of the kind of a gas dissolving.

Alternatively, the coated electric wire may have another layer between the core wire and the coating layer, and may further have another layer (outer layer) on the periphery of the coating layer. In the case where the coating layer contains cells, the coated electric wire of the present disclosure may be of a two-layer structure (skin-foam) in which a non-foaming layer is inserted between the core wire and the coating layer, a two-layer structure (foam-skin) in which a non-foaming layer is coated as the outer layer, or a three-layer structure (skin-foam-skin) in which a non-foaming layer is coated as the outer layer of the skin-foam structure. The non-foaming layer is not limited, and may be a resin layer composed of a resin, such as a TFE/HFP-based copolymer, a TFE/PAVE copolymer, a TFE/ethylene-based copolymer, a vinylidene fluoride-based polymer, a polyolefin resin such as polyethylene [PE], or polyvinyl chloride [PVC].

The coated electric wire can be produced, for example, by using an extruder, heating the copolymer, extruding the copolymer in a melt state on the core wire to thereby form the coating layer.

In formation of a coating layer, by heating the copolymer and introducing a gas in the copolymer in a melt state, the coating layer containing cells can be formed. As the gas, there can be used, for example, a gas such as chlorodifluoromethane, nitrogen or carbon dioxide, or a mixture thereof. The gas may be introduced as a pressurized gas in the heated copolymer, or may be generated by mingling a chemical foaming agent in the copolymer. The gas dissolves in the copolymer in a melt state.

So far, embodiments have been described, but it is to be understood that various changes and modifications of patterns and details may be made without departing from the subject matter and the scope of the claims.

<1> According to a first aspect of the present disclosure, there is provided a coated electric wire comprising a core wire and a coating layer installed on a periphery of the core wire,

wherein the coating layer comprises a fluorine-containing copolymer comprising tetrafluoroethylene unit, hexafluoropropylene unit, and a fluoro(alkyl vinyl ether) unit,
the fluorine-containing copolymer has a content of hexafluoropropylene unit of 9.5 to 10.5% by mass with respect to the whole of the monomer units,

the fluorine-containing copolymer has a content of the fluoro(alkyl vinyl ether) unit of 0 to 0.3% by mass with respect to the whole of the monomer units, and

the fluorine-containing copolymer has a melt flow rate at 372°C of 5.6 to 8.9 g/10 min.

<2> According to a second aspect of the present disclosure, there is provided the coated electric wire according to the first aspect,

wherein the fluorine-containing copolymer has a content of hexafluoropropylene unit of 9.6 to 10.4% by mass with respect to the whole of the monomer units.

<3> According to a third aspect of the present disclosure, there is provided the coated electric wire according to the first or second aspect,

wherein the fluorine-containing copolymer has a content of the fluoro(alkyl vinyl ether) unit of 0 to 0.1% by mass with respect to the whole of the monomer units.

<4> According to a fourth aspect of the present disclosure, there is provided the coated electric wire according to any one of the first to third aspects,

wherein the fluoro(alkyl vinyl ether) unit is perfluoro(propyl vinyl ether) unit.

<5> According to a fifth aspect of the present disclosure, there is provided the coated electric wire according to any one of the first to fourth aspects,

wherein the fluorine-containing copolymer has a melt flow rate at 372°C of 6.1 to 8.1 g/10 min.

<6> According to a sixth aspect of the present disclosure, there is provided the coated electric wire according to any one of the first to fifth aspects,

wherein the fluorine-containing copolymer has a total number of a carbonyl group-containing terminal group, $-CF=CF_2$ and $-CH_2OH$ per $10^6$ main-chain carbon atoms of 70 or less.

<7> According to a seventh aspect of the present disclosure, there is provided the coated electric wire according to any one of the first to sixth aspects,

wherein the fluorine-containing copolymer has the number of $-CF_2H$ per $10^6$ main-chain carbon atoms of 50 or more.

EXAMPLES

Then, the embodiments of the present disclosure will be described by way of Examples, but the present disclosure is not any more limited only to these Examples.

Each numerical value in Examples was measured by the following methods.

(Content of monomer units)

The content of each monomer unit of the fluorine-containing copolymer was measured by an NMR analyzer (for example, manufactured by Bruker BioSpin GmbH, AVANCE 300, high-temperature probe), or an infrared absorption spectrometer (manufactured by PerkinElmer, Inc., Spectrum One).

(Melt flow rate (MFR))

The MFR of the fluorine-containing copolymer was determined by using a Melt Indexer G-01 (manufactured by Toyo Seiki Seisaku-sho, Ltd.), and making the polymer to flow out from a die of 2 mm in inner diameter and 8 mm in length at 372°C under a load of 5 kg and measuring the mass (g/10 min) of the polymer flowing out per 10 min, according to ASTM D1238.

(The number of $-CF_2H$)

The number of $-CF_2H$ groups of the fluorine-containing copolymer was determined from a peak integrated value of the - $CF_2H$ group acquired in a $^{19}F$-NMR measurement using a nuclear magnetic resonance spectrometer AVANCE-300 (manufactured by Bruker BioSpin GmbH) and set at a measurement temperature of (the melting point of the polymer + 20)°C.

(The numbers of -COOH, $-COOCH_3$, $-CH_2OH$, -COF, $-CF=CF_2$ and $-CONH_2$)

A dried powder or pellets obtained in each of Examples and Comparative Examples were molded by cold press to prepare a film of 0.25 to 0.3 mm in thickness. The film was 40 times scanned by a Fourier transform infrared spectrometer [FT-IR (Spectrum One, manufactured by PerkinElmer, Inc.)] and analyzed to obtain an infrared absorption spectrum. The obtained infrared absorption spectrum was compared with an infrared absorption spectrum of an already known film to determine the kinds of terminal groups. Further, from an absorption peak of a specific functional group emerging in a difference spectrum between the obtained infrared absorption spectrum and the infrared absorption spectrum of the already known film, the number N of the functional group per $1\times10^6$ carbon atoms in the sample was calculated according to the following formula (A).

$$N = I \times K/t \cdots (A)$$

I: absorbance
K: correction factor
t: thickness of film (mm)

Regarding the functional groups in Examples, for reference, the absorption frequency, the molar absorption coefficient and the correction factor are shown in Table 2. Further, the molar absorption coefficients are those determined from FT-IR measurement data of low molecular model compounds.

[Table 2]

Table 2

| Functional Group | Absorption Frequency (cm$^{-1}$) | Molar Extinction Coefficient (l/cm/mol) | Correction Factor | Model Compound |
|---|---|---|---|---|
| -COF | 1883 | 600 | 388 | $C_7F_{15}COF$ |
| -COOH free | 1815 | 530 | 439 | $H(CF_2)_6COOH$ |
| -COOH bonded | 1779 | 530 | 439 | $H(CF_2)_6COOH$ |
| -COOCH$_3$ | 1795 | 680 | 342 | $C_7F_{15}COOCH_3$ |
| -CONH$_2$ | 3436 | 506 | 460 | $C_7H_{15}CONH_2$ |
| -CH$_2$OH$_2$, -OH | 3648 | 104 | 2236 | $C_7H_{15}CH_2OH$ |
| -CF=CF$_2$ | 1795 | 635 | 366 | $CF_2=CF_2$ |

(The number of -OC(=O)O-R (carbonate groups))

Analysis of the number of -OC(=O)O-R (carbonate groups) was carried out by a method described in International Publication No. WO2019/220850. The number of -OC(=O)O-R (carbonate groups) was calculated as in the calculation method of the number of functional groups, N, except for setting the absorption frequency at 1,817 cm$^{-1}$, the molar extinction coefficient at 170 (l/cm/mol) and the correction factor at 1,426.

(Melting point)

The fluorine-containing copolymer was heated, as a first temperature raising step at a temperature-increasing rate of 10°C/min from 200°C to 350°C, then cooled at a cooling rate of 10°C/min from 350°C to 200°C, and then again heated, as second temperature raising step, at a temperature-increasing rate of 10°C/min from 200°C to 350°C by using a differential scanning calorimeter (trade name: X-DSC7000, manufactured by Hitachi High-Tech Science Corp.); and the melting point of the fluorine-containing copolymer was determined from a melting curve peak observed in the second temperature raising step.

Comparative Example 1

40.25 kg of deionized water and 0.251 kg of methanol were fed in a 174 L-volume autoclave with a stirrer, and the autoclave inside was sufficiently vacuumized and replaced with nitrogen. Thereafter, the autoclave inside was vacuum deaerated, and in the autoclave put in a vacuum state, 40.25 kg of HFP was fed; and the autoclave was heated to 30.0°C. Then, TFE was fed until the internal pressure of the autoclave became 0.909 MPa; and then, 0.63 kg of a 8-mass% di(ω-hydroperfluorohexanoyl) peroxide solution (hereinafter, abbreviated to DHP) was fed in the autoclave to initiate polymerization. The internal pressure of the autoclave at the initiation of the polymerization was set at 0.909 MPa, and by continuously adding TFE, the set pressure was made to be held. After 1.5 hours from the polymerization initiation, 0.251 kg of methanol was additionally fed. After 2 hours and 4 hours from the polymerization initiation, 0.63 kg of DHP was additionally fed, and the internal pressure was lowered by 0.001 MPa, respectively; after 6 hours therefrom, 0.48 kg thereof was fed and the internal pressure was lowered by 0.001 MPa. Hereafter, 0.13 kg of DHP was fed at every 2 hours until the reaction finished, and at every time, the internal pressure was lowered by 0.001 MPa.

Then, at each time point when the amount of TFE additionally fed reached 6.0 kg and 18.1 kg, 0.251 kg of methanol was additionally fed in the autoclave. Then, when the amount of TFE additionally fed reached 40.25 kg, the polymerization was made to finish. After the finish of the polymerization, unreacted TFE and HFP were discharged to thereby obtain a wet powder. Then, the wet powder was washed with pure water, and thereafter dried at 150°C for 10 hours to thereby obtain 45.6 kg of a dry powder.

The obtained powder was melt extruded at 370°C by a screw extruder (trade name: PCM46, manufactured by Ikegai Corp.) to thereby obtain pellets of a copolymer. By using the obtained pellets, the above physical properties were measured by the methods described above. The results are shown in Table 3.

Comparative Example 2

Copolymer pellets were obtained as in Comparative Example 1, except for changing the amount of methanol fed before the polymerization initiation to 0.263 kg, changing the each amount of methanol dividedly additionally fed after the polymerization initiation to 0.263 kg, and changing the each set pressure in the autoclave inside before and after the polymerization initiation to 0.928 MPa. By using the obtained pellets, the above physical properties were measured by the methods described above. The results are shown in Table **3.**

Comparative Example 3

40.25 kg of deionized water and 0.317 kg of methanol were fed in a 174 L-volume autoclave with a stirrer, and the autoclave inside was sufficiently vacuumized and replaced with nitrogen. Thereafter, the autoclave inside was vacuum deaerated, and in the autoclave put in a vacuum state, 40.25 kg of HFP was fed; and the autoclave was heated to 25.5°C. Then, TFE was fed until the internal pressure of the autoclave became 0.837 MPa; and then, 1.25 kg of an 8-mass% di(ω-hydroperfluorohexanoyl) peroxide solution (hereinafter, abbreviated to DHP) was fed in the autoclave to initiate polymerization. The internal pressure of the autoclave at the initiation of the polymerization was set at 0.837 MPa, and by continuously adding TFE, the set pressure was made to be held. After 1.5 hours from the polymerization initiation, 0.317 kg of methanol was additionally fed. After 2 hours and 4 hours from the polymerization initiation, 1.25 kg of DHP was additionally fed, and the internal pressure was lowered by 0.002 MPa, respectively; after 6 hours therefrom, 0.96 kg thereof was fed and the internal pressure was lowered by 0.002 MPa. Hereafter, 0.25 kg of DHP was fed at every 2 hours until the reaction finished, and at every time, the internal pressure was lowered by 0.002 MPa.

Then, at each time point when the amount of TFE additionally fed reached 6.0 kg and 18.1 kg, 0.317 kg of methanol was additionally fed in the autoclave. Then, when the amount of TFE additionally fed reached 40.25 kg, the polymerization was made to finish. After the finish of the polymerization, unreacted TFE and HFP were discharged to thereby obtain a wet powder. Then, the wet powder was washed with pure water, and thereafter dried at 150°C for 10 hours to thereby obtain 44.8 kg of a dry powder.

The obtained powder was melt extruded at 370°C by a screw extruder (trade name: PCM46, manufactured by Ikegai Corp.) to thereby obtain pellets of a copolymer. By using the obtained pellets, the HFP content and the PPVE content were measured by the methods described above. The results are shown in Table 3.

Comparative Example 4

Copolymer pellets were obtained as in Comparative Example 1, except for changing the amount of methanol fed before the polymerization initiation to 0.361 kg, changing the each amount of methanol dividedly additionally fed after the polymerization initiation to 0.361 kg, and changing the each set pressure in the autoclave inside before and after the polymerization initiation to 0.918 MPa. By using the obtained pellets, the above physical properties were measured by the methods described above. The results are shown in Table 3.

Comparative Example 5

40.25 kg of deionized water and 0.232 kg of methanol were fed in a 174 L-volume autoclave with a stirrer, and the autoclave inside was sufficiently vacuumized and replaced with nitrogen. Thereafter, the autoclave inside was vacuum deaerated, and in the autoclave put in a vacuum state, 40.25 kg of HFP and 0.38 kg of PPVE were fed; and the autoclave was heated to 30.0°C. Then, TFE was fed until the internal pressure of the autoclave became 0.918 MPa; and then, 0.63 kg of an 8-mass% di(ω-hydroperfluorohexanoyl) peroxide solution (hereinafter, abbreviated to DHP) was fed in the autoclave to initiate polymerization. The internal pressure of the autoclave at the initiation of the polymerization was set at 0.918 MPa, and by continuously adding TFE, the set pressure was made to be held. After 1.5 hours from the polymerization initiation, 0.232 kg of methanol was additionally fed. After 2 hours and 4 hours from the polymerization initiation, 0.63 kg of DHP was additionally fed, and the internal pressure was lowered by 0.001 MPa, respectively; after 6 hours therefrom, 0.48 kg thereof was fed and the internal pressure was lowered by 0.001 MPa. Hereafter, 0.13 kg of DHP was fed at every 2 hours until the reaction finished, and at every time, the internal pressure was lowered by 0.001 MPa.

Then, at each time point when the amount of TFE continuously additionally fed reached 8.1 kg, 16.2 kg and 24.3 kg, 0.11 kg of PPVE was additionally fed. Then, at each time point when the amount of TFE additionally fed reached 6.0 kg and 18.1 kg, 0.232 kg of methanol was additionally fed in the autoclave. Then, when the amount of TFE additionally fed reached 40.25 kg, the polymerization was made to finish. After the finish of the polymerization, unreacted TFE and HFP were discharged to thereby obtain a wet powder. Then, the wet powder was washed with pure water, and thereafter dried at 150°C for 10 hours to thereby obtain 45.9 kg of a dry powder.

The obtained powder was melt extruded at 370°C by a screw extruder (trade name: PCM46, manufactured by Ikegai Corp.) to thereby obtain pellets of a copolymer. By using the obtained pellets, the above physical properties were measured by the methods described above. The results are shown in Table 3.

Example 1

Copolymer pellets were obtained as in Comparative Example 1, except for changing the amount of methanol fed before the polymerization initiation to 0.315 kg, changing the each amount of methanol dividedly additionally fed after the polymerization initiation to 0.315 kg, and changing the each set pressure in the autoclave inside before and after the polymerization initiation to 0.937 MPa. By using the obtained pellets, the above physical properties were measured by the methods described above. The results are shown in Table 3.

Example 2

Copolymer pellets were obtained as in Comparative Example 1, except for changing the amount of methanol fed before the polymerization initiation to 0.265 kg, changing the each amount of methanol dividedly additionally fed after the polymerization initiation to 0.265 kg, and changing the each set pressure in the autoclave inside before and after the polymerization initiation to 0.928 MPa. By using the obtained pellets, the HFP content and the PPVE content were measured by the methods described above. The results are shown in Table 3.

The obtained pellets were deaerated at 200°C for 8 hours in an electric furnace, put in a vacuum vibration-type reactor VVD-30 (manufactured by Okawara Mfg. Co. Ltd.), and heated to 200°C. After vacuumizing, $F_2$ gas diluted to 20% by volume with $N_2$ gas was introduced to the atmospheric pressure. 0.5 hour after the $F_2$ gas introduction, vacuumizing was once carried out and $F_2$ gas was again introduced. Further, 0.5 hour thereafter, vacuumizing was again carried out and $F_2$ gas was again introduced. Thereafter, while the above operation of the $F_2$ gas introduction and the vacuumizing was carried out once every 1 hour, the reaction was carried out at a temperature of 200°C for 8 hours. After the reaction was finished, the reactor interior was replaced sufficiently by $N_2$ gas to finish the fluorination reaction, whereby pellets were obtained. By using the obtained pellets, the above physical properties were measured by the methods described above. The results are shown in Table 3.

Example 3

40.25 kg of deionized water and 0.307 kg of methanol were fed in a 174 L-volume autoclave with a stirrer, and the autoclave inside was sufficiently vacuumized and replaced with nitrogen. Thereafter, the autoclave inside was vacuum deaerated, and in the autoclave put in a vacuum state, 40.25 kg of HFP and 0.04 kg of PPVE were fed; and the autoclave was heated to 30.0°C. Then, TFE was fed until the internal pressure of the autoclave became 0.926 MPa; and then, 0.63 kg of an 8-mass% di(ω-hydroperfluorohexanoyl) peroxide solution (hereinafter, abbreviated to DHP) was fed in the autoclave to initiate polymerization. The internal pressure of the autoclave at the initiation of the polymerization was set at 0.926 MPa, and by continuously adding TFE, the set pressure was made to be held. After 1.5 hours from the polymerization initiation, 0.307 kg of methanol was additionally fed. After 2 hours and 4 hours from the polymerization initiation, 0.63 kg of DHP was additionally fed, and the internal pressure was lowered by 0.001 MPa, respectively; after 6 hours therefrom, 0.48 kg thereof was fed and the internal pressure was lowered by 0.001 MPa. Hereafter, 0.13 kg of DHP was fed at every 2 hours until the reaction finished, and at every time, the internal pressure was lowered by 0.001 MPa.

Then, at each time point when the amount of TFE continuously additionally fed reached 8.1 kg, 16.2 kg and 24.3 kg, 0.01 kg of PPVE was additionally fed. Then, at each time point when the amount of TFE additionally fed reached 6.0 kg and 18.1 kg, 0.307 kg of methanol was additionally fed in the autoclave. Then, when the amount of TFE additionally fed reached 40.25 kg, the polymerization was made to finish. After the finish of the polymerization, unreacted TFE and HFP were discharged to thereby obtain a wet powder. Then, the wet powder was washed with pure water, and thereafter dried at 150°C for 10 hours to thereby obtain 45.3 kg of a dry powder.

The obtained powder was melt extruded at 370°C by a screw extruder (trade name: PCM46, manufactured by Ikegai Corp.) to thereby obtain pellets of a copolymer. By using the obtained pellets, the above physical properties were measured by the methods described above. The results are shown in Table 3.

Example 4

Copolymer pellets were obtained as in Comparative Example 1, except for changing the amount of methanol fed before the polymerization initiation to 0.288 kg, changing the each amount of methanol dividedly additionally fed after the polymerization initiation to 0.288 kg, and changing the each set pressure in the autoclave inside before and after the polymerization initiation to 0.918 MPa. By using the obtained pellets, the above physical properties were measured by the methods described above. The results are shown in Table 3. The results are shown in Table 3.

[Table 3]

Table 3

| | HFP content (% by mass) | PPVE content (% by mass) | MFR (g/10 min) | -CF$_2$H (number/C10$^6$) | -COOH -COF -CH$_2$OH (number/C10$^6$) | -OCOOR (number/C10$^6$) | Others (number/C10$^6$) | Melting point (°C) |
|---|---|---|---|---|---|---|---|---|
| Comparative Example 1 | 10.9 | 0 | 7.6 | 337 | 15 | ND | <6 | 262 |
| Comparative Example 2 | 10.0 | 0 | 5.0 | 286 | 14 | ND | <6 | 267 |
| Comparative Example 3 | 9.2 | 0 | 7.9 | 344 | 13 | ND | <6 | 272 |
| Comparative Example 4 | 10.4 | 0 | 14.8 | 420 | 14 | ND | <6 | 265 |
| Comparative Example 5 | 10.4 | 1.0 | 8.1 | 335 | 24 | ND | <6 | 257 |
| Example 1 | 9.6 | 0 | 6.1 | 311 | 14 | ND | <6 | 269 |
| Example 2 | 10.0 | 0 | 7.1 | <9 | <6 | ND | <6 | 267 |
| Example 3 | 10.1 | 0.1 | 8.1 | 345 | 15 | ND | <6 | 266 |
| Example 4 | 10.4 | 0 | 8.0 | 344 | 14 | ND | <6 | 265 |

The description of "Others (number/C10$^6$)" in Table 3 denotes the total number of -COOCH$_3$, -CF=CF$_2$ and -CONH$_2$. The description of "<9" in Table 3 means that the number (total number) of -CF$_2$H groups was less than 9. The description of "<6" in Table 3 means that the number (total number) of the objective functional groups was less than 6. The description of "ND" in Table 3 means that for the objective functional group, no quantitatively determinable peak could be observed.

Then, by using the obtained pellets, the following properties were evaluated. The results are shown in Table 4.

(Forming conditions)

By using a 30-mmφ electric wire coating extruder (manufactured by Tanabe Plastics Machinery Co., Ltd.), the fluorine-containing copolymer was extrusion coated in the following coating thickness on a copper conductor of 0.70 mm in conductor diameter to thereby obtain a coated electric wire. The electric wire coating extrusion conditions were as follows.

a) Core conductor: mild steel wire conductor diameter: 0.70 mm
b) Coating thickness: 0.30 mm
c) Coated electric wire diameter: 1.30 mm
d) Electric wire take-over speed: 20 m/min
e) Extrusion condition:

· Cylinder screw diameter = 30 mm, a single-screw extruder of L/D = 22
· Die (inner diameter)/tip (outer diameter) = 13.0 mm/7.0 mm

Set temperature of the extruder: barrel section C-1 (330°C), barrel section C-2 (360°C), barrel section C-3 (370°C), head section H (380°C), die section D-1 (385°C), die section D-2 (380°C). Set temperature for preheating core wire: 80°C

(Evaluation of outer diameter deviation)

Measurement was performed continuously for 1 hour using an outside diameter measuring instrument (ODAC 18XY manufactured by Zumbach Electronic AG), and the detected value of the maximum and minimum outside diameter was rounded to the second decimal place, with less than $\pm 1\%$ being marked as acceptable (good) and 1% or more as nonacceptable (poor), with respect to the target outside diameter of 1.30 mm.

(Tensile creep test)

The tensile creep strain was measured by using TMA-7100, manufactured by Hitachi High-Tech Science Corp. From the obtained coated electric wire, an electric wire of 20 cm in length was cut out, water and the electric wire cut out were placed in a portable reactor (TVS1 model, manufactured by Taiatsu Glass Industry Inc.), heated in an electric furnace at 150°C for 7 hours, then taken out, cooled to room temperature, and the electric wire was then taken out and the coating layer was peeled off. From the obtained coating layer, a sample of 2 mm in width and 22 mm in length was prepared. The sample was mounted on measurement jigs with the distance between the jigs of 10 mm. A load was applied on the sample so that the cross-sectional load became 2.93 N/mm$^2$, and allowed to stand at 150°C; and there was measured the displacement (mm) from the time point of 70 min from the test initiation to the time point of 300 min from the test initiation, and there was calculated the proportion (tensile creep strain (%)) of the displacement (mm) to the initial sample length (10 mm). A coating layer low in the tensile creep strain (%) measured under the condition of at 150°C for 300 min is hardly elongated even when a tensile load is applied for a long time in a high-temperature environment, being excellent in the 150°C tensile creep resistance.

(Wound crack test)

From the obtained coated electric wire, 10 electric wires of 20 cm in length were cut out and used as electric wires for a wound crack test (test pieces). These test pieces were placed in a portable reactor (TVS1 model, manufactured by Taiatsu Glass Industry Inc.) filled with water in a straight state, heated in an electric furnace at 150°C for 7 hours, then cooled to room temperature, and the test pieces were taken out. The test pieces were wound around an electric wire of the same diameter as the test pieces to obtain a sample, which was again placed in a portable reactor (TVS1 model, manufactured by Taiatsu Glass Industry Inc.) filled with water, heated in an electric furnace at 150°C for 1 hour, then cooled to room temperature, and the sample was taken out. The electric wires were unwound, and the number of electric wires with cracks generated was counted visually and using a magnifying glass. If there was even one crack in one electric wire, it was considered to have a crack. When the number of electric wires confirmed to have a crack is one or less out of 10 wires, it was considered to be good, and when it is two or more, it was considered to be poor.

(150°C Tensile modulus and 150°C tensile elongation)

From the obtained coated electric wire, an electric wire of 20 cm in length was cut out, water and the electric wire cut out were placed in a portable reactor (TVS1 model, manufactured by Taiatsu Glass Industry Inc.), heated in an electric furnace at 150°C for 7 hours, then taken out, and cooled to room temperature. Then, the electric wire was taken out, the core wire was pulled out, and the remaining coating layer was used as a test piece. By using Autograph (AG-I, 300 kN, manufactured by Shimadzu Corp.), the tensile modulus and tensile elongation were measured at 150°C according to ASTM D638 under the condition with a distance between gauge marks of 20 mm and a tensile speed of 50 mm/min. Coating layers with high tensile modulus at 150°C have excellent deformation resistance to tensile load applied at 150°C. Also, coating layers with high tensile elongation at 150°C have excellent ductility to tensile force applied at 150°C.

[Table 4]

Table 4

|  | 150°C Tensile creep strain (%) | Electric wire coating test Evaluation of outer diameter deviation | Wound crack test | 150°C Tensile elongation (%) | 150°C Tensile modulus (MPa) |
|---|---|---|---|---|---|
| Comparative Example 1 | 1.71 | good | good | 260 | 37.4 |
| Comparative Example 2 | 0.94 | poor | good | 257 | 37.1 |
| Comparative Example 3 | 0.69 | good | poor | 222 | 45.1 |
| Comparative Example 4 | 1.57 | poor | poor | 220 | 45.1 |
| Comparative Example 5 | 2.32 | good | good | 329 | 36.5 |
| Example 1 | 0.80 | good | good | 243 | 41.0 |
| Example 2 | 1.04 | good | good | 244 | 40.6 |
| Example 3 | 1.35 | good | good | 249 | 40.9 |
| Example 4 | 1.32 | good | good | 247 | 40.3 |

(Reference Example: film formation)

Films of the copolymers described in Comparative Examples 1 to 5 and Examples 1 to 4 were prepared using a T die in a φ14-mm extruder (manufactured by Imoto Machinery Co., Ltd.), and it was visually confirmed that the films were prepared without any problems. The extrusion conditions were as follows.

a) Take-up speed: 1 m/min
b) Roll temperature: 120°C
c) Film width: 70 mm
d) Thickness: 0.10 mm
e) Extrusion condition:

· Cylinder screw diameter = 14 mm, a single-screw extruder of L/D = 20

Set temperature of the extruder: barrel section C-1 (330°C), barrel section C-2 (350°C), barrel section C-3 (365°C), T die section (370°C)

(Reference Example: tube formation)

Using the copolymers described in Comparative Examples 1, 2 and 5, and Examples 1 to 4, tubes with an outer diameter of 10.0 mm and a wall thickness of 1.0 mm were extruded in a φ30-mm extruder (manufactured by Tanabe Plastics Machinery Co., Ltd.), and it was visually confirmed that the tubes were prepared without any problems. The extrusion conditions were as follows.

a) Die inner diameter: 25 mm
b) Mandrel outer diameter: 13 mm

c) Sizing die inner diameter: 10.5 mm
d) Take-over speed: 0.4 m/min
e) Outer diameter: 10.0 mm
f) Wall thickness: 1.0 mm
g) Extrusion condition:

· Cylinder screw diameter = 30 mm, a single-screw extruder of L/D = 22

Set temperature of the extruder: barrel section C-1 (350°C), barrel section C-2 (370°C), barrel section C-3 (380°C), head section H-1 (390°C), die section D-1 (390°C), die section D-2 (390°C)

**Claims**

1.  A coated electric wire comprising a core wire and a coating layer installed on a periphery of the core wire,

    wherein the coating layer comprises a fluorine-containing copolymer comprising tetrafluoroethylene unit, hexafluoropropylene unit, and a fluoro(alkyl vinyl ether) unit,
    the fluorine-containing copolymer has a content of hexafluoropropylene unit of 9.5 to 10.5% by mass with respect to the whole of the monomer units,
    the fluorine-containing copolymer has a content of the fluoro(alkyl vinyl ether) unit of 0 to 0.3% by mass with respect to the whole of the monomer units, and
    the fluorine-containing copolymer has a melt flow rate at 372°C of 5.6 to 8.9 g/10 min.

2.  The coated electric wire according to claim 1, wherein the fluorine-containing copolymer has a content of hexafluoropropylene unit of 9.6 to 10.4% by mass with respect to the whole of the monomer units.

3.  The coated electric wire according to claim 1 or 2, wherein the fluorine-containing copolymer has a content of the fluoro(alkyl vinyl ether) unit of 0 to 0.1% by mass with respect to the whole of the monomer units.

4.  The coated electric wire according to any one of claims 1 to 3, wherein the fluoro(alkyl vinyl ether) unit is perfluoro(propyl vinyl ether) unit.

5.  The coated electric wire according to any one of claims 1 to 4, wherein the fluorine-containing copolymer has a melt flow rate at 372°C of 6.1 to 8.1 g/10 min.

6.  The coated electric wire according to any one of claims 1 to 5, wherein the fluorine-containing copolymer has a total number of a carbonyl group-containing terminal group, $-CF=CF_2$ and $-CH_2OH$ per $10^6$ main-chain carbon atoms of 70 or less.

7.  The coated electric wire according to any one of claims 1 to 6, wherein the fluorine-containing copolymer has the number of $-CF_2H$ per $10^6$ main-chain carbon atoms of 50 or more.

## INTERNATIONAL SEARCH REPORT

| | International application No. |
|---|---|
| | **PCT/JP2023/013255** |

**A.    CLASSIFICATION OF SUBJECT MATTER**

*H01B 7/02*(2006.01)i; *C08F 214/26*(2006.01)i; *H01B 3/24*(2006.01)i
FI:    H01B7/02 Z; H01B3/24 A; C08F214/26; H01B7/02 F

According to International Patent Classification (IPC) or to both national classification and IPC

**B.    FIELDS SEARCHED**

Minimum documentation searched (classification system followed by classification symbols)

H01B7/02; C08F214/26; H01B3/24

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 3-122907 A (HITACHI CABLE LTD.) 24 May 1991 (1991-05-24)<br>    entire text | 1-7 |
| A | JP 5-151846 A (THE FURUKAWA ELECTRIC CO., LTD.) 18 June 1993 (1993-06-18)<br>    entire text | 1-7 |
| A | JP 9-52920 A (E.I. DU PONT DE NEMOURS AND CO.) 25 February 1997 (1997-02-25)<br>    entire text | 1-7 |
| A | WO 01/18076 A1 (DAIKIN INDUSTRIES, LTD.) 15 March 2001 (2001-03-15)<br>    entire text | 1-7 |
| A | WO 03/006566 A1 (DAIKIN INDUSTRIES, LTD.) 23 January 2003 (2003-01-23)<br>    entire text | 1-7 |
| A | WO 2019/159652 A1 (DAIKIN INDUSTRIES, LTD.) 22 August 2019 (2019-08-22)<br>    entire text | 1-7 |

☐ Further documents are listed in the continuation of Box C.          ☑ See patent family annex.

| | | |
|---|---|---|
| \* | Special categories of cited documents: | "T"    later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X"    document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&"    document member of the same patent family |

| Date of the actual completion of the international search | Date of mailing of the international search report |
|---|---|
| **06 June 2023** | **13 June 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/013255**

| Patent document cited in search report | | | Publication date (day/month/year) | Patent family member(s) | | | Publication date (day/month/year) |
|---|---|---|---|---|---|---|---|
| JP | 3-122907 | A | 24 May 1991 | (Family: none) | | | |
| JP | 5-151846 | A | 18 June 1993 | US entire text | 5571462 | A | |
| JP | 9-52920 | A | 25 February 1997 | US entire text | 5677404 | A | |
| WO | 01/18076 | A1 | 15 March 2001 | EP entire text | 1260526 | A1 | |
| WO | 03/006566 | A1 | 23 January 2003 | EP entire text | 1398358 | A1 | |
| WO | 2019/159652 | A1 | 22 August 2019 | US entire text | 2021/0032201 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2001018076 A

- WO 2019220850 A